# EUROPÄISCHE PATENTSCHRIFT

(11) **EP 2 550 865 B1**
(45) Veröffentlichungstag und Bekanntmachung des Hinweises auf die Patenterteilung: **15.07.2015**
(21) Anmeldenummer: 12176806.3
(22) Anmeldetag: 18.07.2012
(51) Int. Cl.: A21C 15/02, A21D 2/18, A21D 13/00

(54) **Verfahren und Vorrichtung zur Herstellung eines hohlkörperförmigen gebackenen Produktes**
Method and device for producing a baked product in the shape of a hollow body
Procédé et dispositif destinés à la fabrication d'un produit creux cuit

(30) Priorität: 25.07.2011 AT 10862011
(43) Veröffentlichungstag der Anmeldung: 30.01.2013
(73) Patentinhaber: Haas Food Equipment GmbH, 1210 Wien (AT)
(72) Erfinder: HAAS, Johannes, 1040 Wien (AT); HAAS, Josef, 2100 Leobendorf (AT); JIRASCHEK, Stefan, 2202 Königsbrunn (AT); OBERMAIER, Fritz, 3500 Krems (AT)
(74) Vertreter: Grabherr, Claudia

(56) Entgegenhaltungen:
- EP-A1- 0 211 356
- DE-A1- 19 756 776
- US-A- 2 004 530

## Beschreibung

Die Erfindung betrifft ein hohlkörperförmiges, gebackenes Produkt sowie ein Verfahren und eine Vorrichtung zur Herstellung des Produktes, das zumindest teilweise aus einem verzehrbaren, gebackenen Waffelfladen gebildet ist, welcher im heißen Zustand umformbar und während und/oder nach dem Umformvorgang eine verfestigte, becherförmige Form aufweist.

Das hohlkörperförmige gebackene Produkt ist dabei zumindest teilweise aus Backmassen oder Teigwaren für Dauerbackwaren aus Mehlen und/oder Stärken gebildet, wobei vorzugsweise Teige und Backmassen zum Einsatz kommen, wie sie beispielsweise in der WO 00/05966 exemplarisch offenbart sind.

Dabei wird das einfache Verfahren des Backens eines flachen Waffelstückes kombiniert mit der Möglichkeit, dieses bei der Backtemperatur oder knapp darunter durch den geschmolzenen Zuckeranteil zu plastifizieren und damit noch leicht mechanisch nachformen zu können, aber sodann durch einfaches und schnelles Abkühlen den Zucker erstarren zu lassen und damit die erhaltene Gestalt zu stabilisieren. Es wird dadurch ebenfalls ein sprödes, hartes Produkt erhalten. Diese im Wesentlichen aus einem Stärke-Zucker (Zuckerersatz)-Protein-Gemisch bestehenden Waffeln sind bei Raumtemperatur unter dem Glaspunkt. Der Zuckeranteil ist überdies meist als glasige Schmelze erstarrt und daher besonders knusprig in der Textur.

Typische Zuckeranteile sind beispielsweise für gerollte Eistüten 30 bis 50 Gew.-% bezogen auf Mehl oder 60 bis 100 Gew.-% bei Hohlhippen.

Verfahren und Vorrichtungen zur Formgebung waffelartiger Dauerbackwaren sind ebenfalls bekannt und dementsprechend auch in die Patentliteratur eingegangen.

Die AT 384 933 B beispielsweise zeigt eine Vorrichtung und ein Verfahren zur Herstellung von gerollten, vorzugsweise kegelförmigen Hohlwaffeln. Aus einzelnen, insbesondere aus zuckerhaltigen Teig gebackenen Waffelfladen, bei welchen die Waffelfladen zuerst im backweichen, formbaren Zustand zu einer bestimmten Gestalt der Hohlwaffeln gerollt und dann in dieser Gestalt erstarren gelassen werden, wobei jeder Waffelfladen zuerst zur vorbestimmten Gestalt der Hohlwaffel frei eingerollt wird, und wobei dann die fertiggerollte Hohlwaffel durch plastisches Verformen von Randbereichen auf eine vorbestimmte Längserstreckung der Hohlwaffel kalibriert wird und ferner dann die kalibrierte Hohlwaffel erstarren gelassen wird.

Diese gerollten Tüten haben sich in der Praxis aufgrund ihrer Eigenschaften wie beispielsweise Stabilität, Aussehen, Haptik, Verarbeitbarkeit, Befüllbarkeit, etc, bewährt und gehören somit zu den am häufigsten angetroffenen waffelartigen Hohlkörperformen.

Eine alternative Vorrichtung zur Herstellung eines Waffelproduktes ist in der DE 10 005 500 A1 gezeigt. Dabei wird ein Waffelprodukt mit Seitenwänden tiefgezogen, die vorzugsweise im oberen Bereich senkrecht gegenüberstehend angeordnet sind, wobei das Waffelprodukt durch Hineindrücken eines im Wesentlichen ebenen Waffelstückes durch einen Formstempel in eine entsprechende Hohlform entsteht und wobei der obere Rand der vorzugsweise senkrecht gegenüberliegenden Seitenwände des tiefgezogenen Waffelproduktes bündig geschnitten wird. Das ebenfalls offenbarte Herstellungsverfahren ist mit dem Umformverfahren des Gesenkschmiedens vergleichbar. Das Waffelblatt wird nach dem Backvorgang in heißem und dadurch verformbaren Zustand von einem Stempel in ein Gesenk gedrückt und dabei zwischen diesen beiden Elementen gequetscht.

Ein weiteres Verfahren zur Formung eines verzehrbaren Hohlgefäßes aus Waffelteig zeigt die WO 99/33348. Dabei wird ein ebenfalls im Wesentlichen flaches Waffelblatt mittels eines Stempels in ein Gesenk gezogen. Durch die geometrischen Verhältnisse insbesondere die Proportionen zwischen dem Umfang des gebackenen Waffelfladens und dem Umfang der Öffnung des fertig geformten Hohlgefäßes kann es vorkommen, dass im Bereich der Öffnung eine Faltenbildung auftritt.

Ferner ist aus der DE 197 56 776 A1 ein durch ein Tiefziehen hergestelltes Hohlgefäß aus einem Waffelblatt bekannt, welches durch Falten gebildete Bereiche größerer Materialdicke aufweist, die bei der Herstellung zufällig am Umfang verteilt werden.

In der Praxis hat sich gezeigt, dass es wünschenswert sein kann, verzehrbare hohlkörperförmige, gebackene Produkte, insbesondere verzehrbare Hohlgefäße aus waffelartigen Teigen oder Backmassen mit Verstärkungsrippen zu versehen, um deren Stabilität sowie deren physikalischen Eigenschaften positiv zu beeinflussen. Die Ausführung von Rippen ist aber bei eingangs erwähntem Herstellungsverfahren dadurch beschränkt, dass nach der Verfestigung dickere Stellen andere physikalische Eigenschaften aufweisen und z.B. weich oder auch zu hart werden. Um dennoch dickere Bereiche in Waffelprodukten vorzusehen, ist es demnach vorteilhaft diese Bereiche mehrlagig auszuführen. Die Faltenbildung während eines Tiefziehvorgangs ist eine Möglichkeit diese Mehrlagigkeit zu erreichen.

Nachteilig am Stand der Technik ist, dass es nicht möglich ist gezielte Strukturen mehrlagiger Bereiche in hohlkörperförmigen, gebackenen Produkten oder verzehrbaren Hohlgefäßen vorzusehen, die die Stabilität, das Aussehen, die physikalischen Eigenschaften, die Knusprigkeit, das "Esserlebnis" und den Klang beim Verzehr etc. verbessern.

Aufgabe der vorliegenden Erfindung ist es ein hohlkörperförmiges, gebackenes Produkt sowie ein Verfahren und eine Vorrichtung zur Herstellung eines erfindungsgemäßen Produktes zu schaffen, welches die Nachteile des Standes der Technik überwindet und darüber hinaus günstig in der Herstellung, flexibel in der Formgebung, flexibel in der Steuerung der Faltenstruktur und effizient herzustellen ist.

Die Aufgabe wird dadurch gelöst, dass bei einem Verfahren zur Herstellung von hohlkörperförmigen, gebackenen Produkten aus verzehrbaren, gebackenen Waffelfladen, die im heißen, formbaren Zustand umgeformt und während und/oder nach dem Umformvorgang abkühlt und somit verfestigt werden, wobei die Waffelfladen im heißen, formbaren Zustand einer Tiefziehöffnung zugeführt, von einer Vorformvorrichtung in den Faltenbereichen von einer im Wesentlichen planen Form in eine, in den Faltenbereichen gewölbte, vorgeformte Form gebracht und von einem Stempel in eine Tiefziehöffnung tiefgezogen werden, wobei sich, beeinflusst durch die Vorformung, die Faltenbereiche jedes einzelnen Waffelfladens beim Tiefziehvorgang mehrlagig übereinander legen, der Waffelfladen zuerst plan auf einem Ziehring über der Tiefziehöffnung positioniert, dort von einer Haltekraft gehalten, anschließend von Vorwölbelementen der Vorformvorrichtung in den Faltenbereichen entgegen der Haltekraft aufgewölbt und anschließend von dem Stempel der Tiefziehvorrichtung in die Tiefziehöffnung tiefgezogen wird.

Ferner ist die vorliegende Erfindung in vorteilhafter Weise dadurch gekennzeichnet, dass der vorgeformte Waffelfladen beim Tiefziehvorgang von einer, in den Faltenbereichen gewölbten Form in eine im Wesentlichen becherförmige Form gebracht wird und/oder dass beim Tiefziehvorgang die gewölbten Faltenbereiche zuerst Ω-förmig und in weiterer Folge mehrlagig übereinanderliegend ausgebildet sind.

Gemäß weiteren vorteilhaften Merkmalen kann vorgesehen sein, dass der Waffelfladen rund, oval, rechteckig, vieleckig, quadratisch, sternförmig ist oder jeglicher weiterer Form entspricht, bei der die Längserstreckung die Dicke um ein Vielfaches übersteigt, dass der Waffelfladen bei der Vorformung eine, die Position der Faltenbereiche steuerbare, Form gegeben wird, dass der Waffelfladen entlang der Übergabefläche der Tiefziehöffnung zugeführt wird, von Zentrierfortsätzen über der Tiefziehöffnung zentriert wird, von der Vorformvorrichtung vorgeformt und von dem Stempel der Tiefziehvorrichtung in die Tiefziehöffnung tiefgezogen wird, dabei und/oder danach abgekühlt und verfestigt und anschließend von der Auswurfvorrichtung aus der Tiefziehöffnung ausgeworfen wird.

Darüber hinaus sind erfinderische Merkmale, dass der Stempel von einer Position außerhalb der Tiefziehöffnung im Wesentlichen linear zumindest teilweise in die Tiefziehöffnung eingeführt wird und dabei den Waffelfladen mit in die Tiefziehöffnung zieht und/oder dass der Waffelfladen aus einem Teig oder einer Backmasse besteht die ein Plastifizierungsmittel, insbesondere ein temperaturabhängiges Plastifizierungsmittel, wie beispielweise Zucker, Erythrit und/oder Xylit enthält.

Das Hohlkörperförmige, gebackene Produkt das zumindest teilweise aus einem verzehrbaren, gebackenen Waffelfladen gebildet ist, welcher im heißen Zustand umformbar und während und/oder nach dem Umformvorgang eine becherförmige Form aufweist, zeichnet sich dadurch aus, dass das Produkt mehrlagig ausgeführte Faltenbereiche aufweist, die symmetrisch und/oder rotationsymmetrisch am Umfang verteilt angeordnet sind, dass die Haupterstreckungsrichtungen der Faltenbereiche im Wesentlichen normal zum Becherrand Richtung Becherboden verlaufen, dass die Faltenbereiche zumindest zweilagig, bevorzugt dreilagig ausgeführt sind und/oder dass die Faltenbereiche im Wesentlichen anliegend, der Form des Bechers folgend ausgeführt sind.

Ferner betrifft die Erfindung eine Vorrichtung zur Herstellung eines hohlkörperförmigen, gebackenen Produktes, umfassend eine Tiefziehvorrichtung mit einer Tiefziehöffnung, über der ein gebackener, formbarer und verfestigbarer Waffelfladen positionierbar ist, und mit einem Stempel, welcher über eine Stempelbewegungsvorrichtung von einer Position außerhalb der Tiefziehöffnung in diese zumindest teilweise einführbar ist, die dadurch gekennzeichnet ist, dass im Bereich der Tiefziehöffnung eine Vorformvorrichtung zur Vorformung des Waffelfladen vorgesehen ist, dass die Vorformvorrichtung Vorwölbelemente umfasst, die im Bereich der Faltenbereiche des Waffelfladen angeordnet und bevorzugt in Richtung Waffelfladen ausfahrbar sind, dass ein, die Tiefziehöffnung im Wesentlichen umgebender Ziehring vorgesehen ist auf dem der Waffelfladen mit einer Haltekraft gehalten ist und/oder dass der Ziehring parallel zur oder in der Übergabefläche angeordnet ist.

Weiters sind erfindungsgemäße Merkmale der Vorrichtung, dass zumindest ein Zentrierfortsatz zur Zentrierung und/oder Positionierung des Waffelfladen über der Tiefziehöffnung vorgesehen ist, dass die Zentrierfortsätze den Ziehring entgegen der Haltekraft überragen, dass die Vorwölbelemente von einer zurückgezogenen Position, in der sie im Wesentlichen in der Übergabefläche versenkt sind, in eine ausgefahrene Position, in der Sie den Ziehring überragen, bringbar sind und/oder dass zur Bewegung der Vorwölbelemente ein Antrieb vorgesehen ist.

Dabei ist anzumerken, dass die Bezeichnungen Tiefziehöffnung, Ziehring, Ronde und Stempel übliche Begriffe aus der Metallumformtechnik sind. Die Verwendung dieser Begriffe dient der Klarheit und der besseren Verständlichkeit der Anmeldung. Keinesfalls sind diese Begriffe jedoch auf Ihre bei der Metallumformtechnik üblichen Verwendung beschränkend auszulegen. Beispielsweise ist als Tiefziehform eine, einen Hohlraum beinhaltende, Form benannt, in welchen die Ronde von dem Stempel tiefgezogen wird. Diese Tiefziehform kann ähnlich einem Gesenk formgebende Funktion haben - muss aber nicht. So ist es von dem Volumen der tiefgezogenen Ronde und dem Restvolumen zwischen dem zur Gänze eingeschobenen Stempel und der Tiefziehform abhängig, ob die Ronde in dem dadurch entstehenden Spalt gequetscht wird, oder frei tiefgezogen wird, sodass die Ronde an der Tiefziehform nicht anliegt. Durch die geeignete Wahl der Form des Stempels und der Tiefziehform kann die Form und Oberfläche des essbaren Hohlkörpers bestimmt werden. Durch das Vorsehen eines Prägestempels oder eines Reliefs in der Tiefziehform oder am Stempel kann beispielsweise dem Waffelkörper eine bestimmte Textur eingeprägt werden. Beim freien Tiefziehen, also ohne großflächige Anlage oder Quetschung an der Tiefziehform bleibt die gitterförmige Oberflächenprägung der Backzangen des Backofens 1 erhalten.

Auch die Bezeichnung Ronde ist nicht als Einschränkung auf runde, flache fladenförmige Körper aus Backmassen oder Teigwaren für Dauerbackwaren beschränkt. So entspricht es dem Erfindungsgedanken auch, rechteckige, ovale, sternförmige, polygonförmige, waffelfladenförmige oder andere Rondenformen zu wählen. Bevorzugt ist die Ronde als Waffelfladen ausgebildet.

Das Verfahren gemäß der Beschreibung und den Patentansprüchen kann auch dadurch gekennzeichnet sein, dass der Waffelfladen rund, oval, rechteckig, vieleckig, quadratisch, sternförmig ist oder jeglicher weiterer Form entspricht, bei der die Längserstreckung deren Dicke um ein Vielfaches übersteigt, und/oder dass der Stempel von einer Position außerhalb der Tiefziehöffnung im Wesentlichen linear zumindest teilweise in die Tiefziehöffnung eingeführt wird und dabei den Waffelfladen mit in die Tiefziehöffnung zieht.

Das Hohlkörperförmiges, gebackenes Produkt gemäß der Beschreibung und den Patentansprüchen kann auch dadurch gekennzeichnet sein, dass die Faltenbereiche zumindest zweilagig, bevorzugt dreilagig ausgeführt sind und/oder dass die Faltenbereiche im Wesentlichen anliegend, der Form des Bechers folgend ausgeführt sind.

Die Erfindung wird in weiterer Folge anhand von unterschiedlichen Ausführungsbeispielen näher beschrieben:
Fig. 1 zeigt eine schematische Darstellung einer erfindungsgemäßen Fertigungsanlage für essbare Körper, wobei Fig.1A eine Seitenansicht und Fig.1B eine Ansicht von oben zeigt.
Fig. 2 zeigt eine schematisch dargestellte Schrägansicht der maßgeblichen Vorrichtung zur Herstellung des essbaren Körpers in Stellung A.
Fig. 3 zeigt eine schematische Schnittdarstellung der maßgeblichen Teile der Vorrichtung zur Herstellung des essbaren Körpers, ebenfalls in Stellung A.
Fig. 4 zeigt eine schematische Schrägansicht der Vorrichtung in der Stellung B.
Fig. 5 zeigt eine schematische Schnittdarstellung eines Details der Vorrichtung in Stellung B.
Fig. 6 zeigt eine Schrägansicht eines Details der Vorrichtung in Stellung C,
Fig. 7 zeigt eine schematische Schnittdarstellung der Vorrichtung in Stellung C.
Fig. 8 zeigt eine Schrägdarstellung (schematisch) eines Details der Vorrichtung in Stellung D.
Fig. 9 zeigt die Vorrichtung nach den vorherigen Figuren in Stellung E, und
Fig. 10 zeigt eine Schnittdarstellung der Vorrichtung nach Fig. 9.

Die Figuren 11 bis 14 zeigen schematische Aufsichten auf den Rand der Ronde bei der Umformung mit gewünschter Faltenbildung.

Fig. 15 zeigt eine Seitenansicht eines erfindungsgemäßen hohlkörperförmigen gebackenen Produktes.

Fig. 16 zeigt eine weitere Ausführungsform eines erfindungsgemäßen gebackenen Hohlkörpers.

Fig. 17 zeigt eine Aufsicht von oben mit Blick in den becherförmigen Hohlkörper aus Fig. 16.

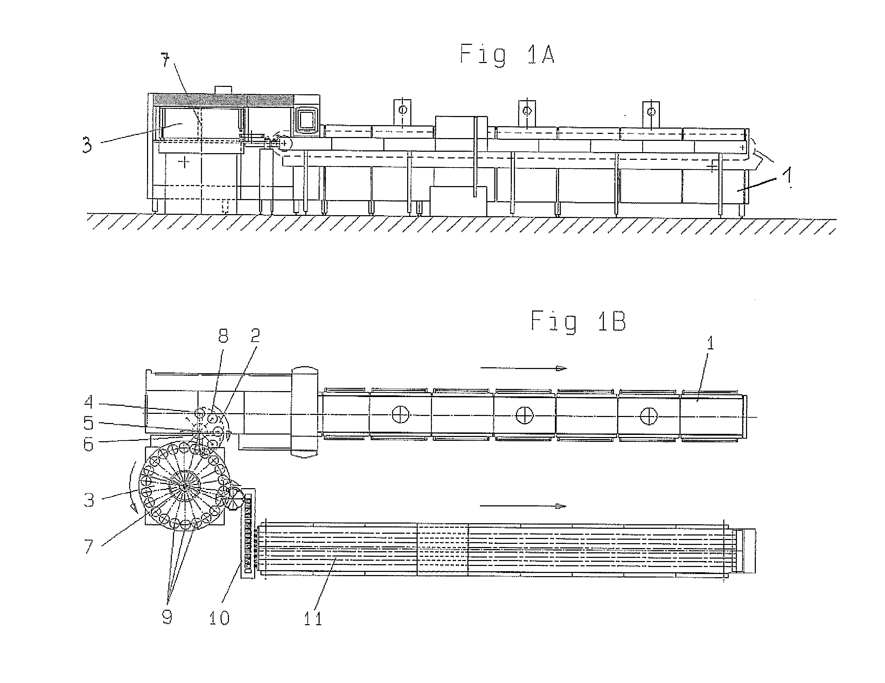

Fig. 1 zeigt eine schematische Ansicht einer Anordnung eines Backofens für die Bearbeitung der Ronden, die bevorzugt als Waffelfladen ausgebildet sind.

Dabei zeigt Fig. 1a eine Seitenansicht eines Backofens mit der erfindungsgemäßen Vorrichtung zur Herstellung des gebackenen Produktes und Fig. 1b eine Aufsicht von oben eines Backofens und der Vorrichtung zur Herstellung des hohlkörperförmigen gebackenen Produktes.

Der Backofen ist bevorzugt als Waffelbackofen mit umlaufenden Backzangen ausgebildet und umfasst eine Ausgabestation des Backofens 1 an der der Backweiche Waffelfladen, der auch als Ronde bezeichnet werden kann, von den einzeln öffnenden Backzangen abgenommen und von der Übergabevorrichtung 2 zur Umformvorrichtung 3 übergeben wird. In der vorliegenden Ausführung geschieht diese Übergabe durch Greifer 4, weiche drehbar um die Drehachse 5 der Übergabevorrichtung 2 angeordnet sind, die Waffelfladen von oben berühren und in weiterer Folge in einer Drehbewegung um die Drehachse 5 entlang einer, im Wesentlichen horizontal verlaufenden Übergabefläche 6 der Umformvorrichtung 3 zuführen. Die Umformvorrichtung 3 umfasst mindestens eine, bevorzugt eine Mehrzahl von Tiefziehvorrichtungen, welche drehbar um die Drehachse 7 der Umformvorrichtung 3 bewegbar sind. Die Geschwindigkeit der umlaufenden Backzangen sowie die Winkelgeschwindigkeiten der Übergabevorrichtung und der Umformvorrichtung sind derart synchronisiert, dass jeweils beim Öffnen einer Backzange der backweiche, noch formbare Waffelfladen 8 oder die Ronde, von der Übergabevorrichtung 2 abgenommen und in einer gleichförmigen Drehbewegung der Umformvorrichtung 3, im Speziellen jeweils einer umlaufenden Tiefziehvorrichtung 9 zugeführt wird. Dabei ist die absolute mittlere Geschwindigkeit des Waffelfladen auf der Übergabevorrichtung größer als die Geschwindigkeit des Waffelfladen auf der Umformvorrichtung.

Während der Drehung des Waffelfladen auf der Umformvorrichtung 3 um die Achse 7 wird der Waffelfladen 8 mit den nachfolgend beschriebenen Verfahrensschritten tiefgezogen. Die Verfahrensschritte umfassen die Positionen A, B, C, D, E die bevorzugt in dieser Reihenfolge durchlaufen werden. Am Ende des Umformverfahrens wird der tiefgezogene essbare Körper, also das hohlkörperförmige gebackene Produkt, von einer Abnahmevorrichtung 10 an eine Nachkonditioniervorrichtung 11 übergeben. Die Abnahmevorrichtung 10 umfasst eine drehbare Abnahme, welche die gebackenen Produkte linear aneinander reiht. In weiterer Folge wird eine Mehrzahl linear aneinander gereihter gebackener Produkte im Wesentlichen normal zur linearen Aneinanderreihung der Nachkonditioniervorrichtung zugeführt. In dieser können die essbaren Körper beispielsweise vorgekühlt, befettet und endgekühlt werden oder auch mit einem Überzug aus z.B. Schokolade versehen werden.

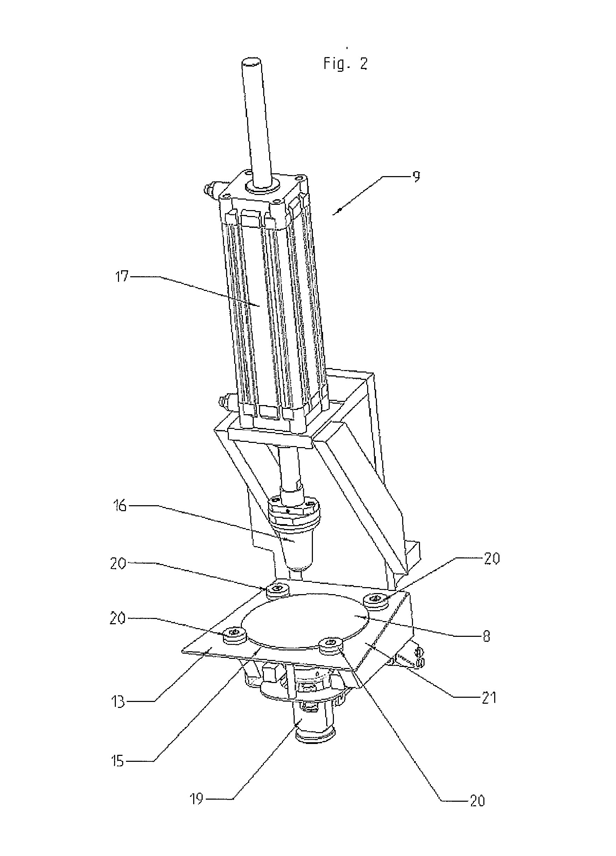

Fig. 2 zeigt eine schematische Schrägansicht einer Ausführungsform der erfindungsgemäßen Tiefziehvorrichtung 9. Die Vorrichtung befindet sich in Stellung A bei der der Stempel 16 von der Stempelbewegungsvorrichtung 17 in gehobener Position, entfernt von dem backweichen Waffelfladen 8 angeordnet ist. Der Waffelfladen 8 ist außerhalb der Tiefziehform 13 bzw. der Tiefziehöffnung 14, welche einen Ziehring 15 aufweist, positioniert.

Wie in der Beschreibung zu Fig. 1 angemerkt, wird der Waffelfladen, kommend von dem Backofen durch eine Übergabevorrichtung der Umformvorrichtung zugeführt. Zur Positionierung des Waffelfladen sind Zentrierfortsätze 20 vorgesehen, welche aus der Basisfläche 21 der Umformvorrichtung ragen, um so als Anschlag und zur Zentrierung des Waffelfladen über der Tiefziehöffnung wirken zu können. Neben der dargestellten zylindrischen Ausführung ist es auch möglich, die Anschlagelemente anders, z.B. durch Vertiefungen in der Basisfläche 21 oder durch Anschlagleisten und dergleichen zu verwirklichen. In dieser Ausführungsform sind vier Zentrierfortsätze 20 vorgesehen. Die Verwendung einer geringeren Anzahl dieser Anschlagelemente kann Vorteile bei der Zuführbarkeit des Waffelfladen bringen. So kann in dieser oder einer weiteren Ausführungsform die Basisfläche 21 der Umformvorrichtung fluchtend mit der Übergabefläche 6 ausgeführt sein, wobei die Ronde gleitend über beide Flächen zugeführt wird und an den Zentrierfortsätzen 20, die als Anschlagelemente dienen, von dem Greifer 4 abgestriffen werden. Bei der Verwendung von vier Zentrierfortsätzen ist die Übergabefläche 6 um einen gewissen Betrag, bevorzugt um die Höhe der Zentrierfortsätze 20, höher gelagert als die Basisfläche 21 der Umformvorrichtung. So wird der Waffelfladen über die Zentrierfortsätze geschoben und dann durch die Schwerkraft über der Tiefziehformnöffnung positioniert und durch die Zentrierfortsätze 20 zentriert abgelegt.

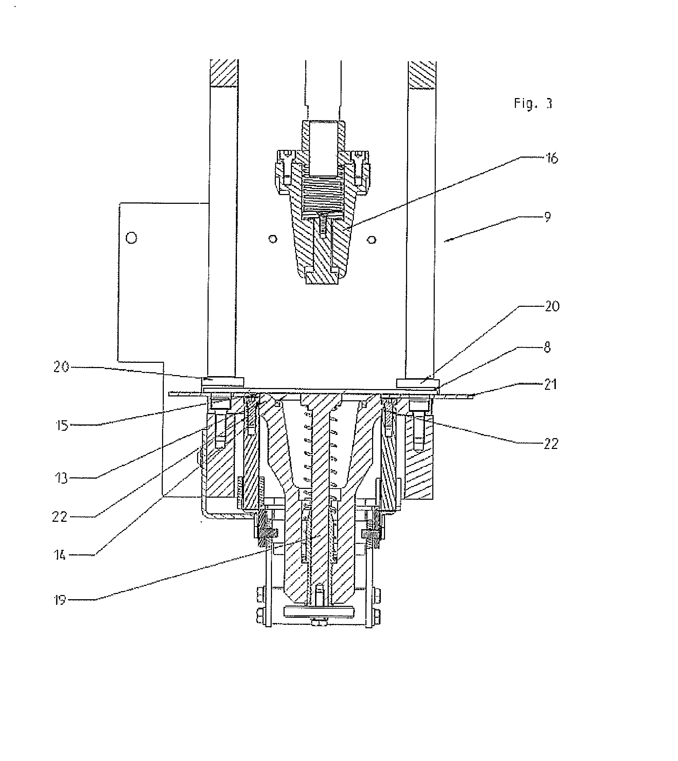

Der Waffelfladen 8 ist gemäß Fig. 2 und 3 über der Tiefziehöffnung 14, also auf dem Ziehring 15 der Tiefziehvorrichtung 9 positioniert. Der Ziehring liegt in dieser Ausführungsform in der Übergabefläche 6 der Umformvorrichtung 3. Gehalten wird der Waffelfladen durch die Schwerkraft, welche in der vorliegenden Konfiguration parallel zur Bewegungsrichtung 18 der Stempelbewegungsvorrichtung 17 verläuft. Bei abweichender oder alternativer Konfiguration kann der Waffelfladen auch durch die Fliehkraft, welche bei drehender Umformvorrichtung 3 nach außen wirkt, gehalten sein. Ferner ist es ebenfalls Teil der Erfindung, abgesehen von Beschleunigungskräften durch Erdbeschleunigung oder Fliehkraftbeschleunigungen auch Haltekräfte durch Unterdruckvorrichtungen aber auch durch mechanische Halter und dergleichen zu erwirken.

In Stellung A liegt der Waffelfladen plan auf der Übergabefläche 6, insbesondere auf dem Ziehring 15 über der Tiefziehöffnung und dementsprechend über der Tiefziehform 13. Die Bezeichnung "über" bezieht sich auf die schematische Darstellung wie sie in Fig. 2 gezeigt ist. In der Praxis kommt es vor, dass durch die geringe Steifigkeit des Waffelfladen ein Durchhang in die Tiefziehöffnung entsteht. Obwohl dabei der Waffelfladen teilweise in die Tiefziehöffnung ragt wird in weiterer Folge zur Verbesserung der Klarheit und der Einfachheit von der Positionierung "über" zu der Tiefziehöffnung gesprochen.

Die Betätigung der Stempelbewegungsvorrichtung zur Bewegung des Stempels 16 in Bewegungsrichtung 18 ist in dieser Ausführungsform durch eine Pneumatikanordnung gegeben wie beispielsweise Linearantriebe, Pneumatikzylinder etc. Selbstverständlich ist es Teil des Erfindungsgedankens diese Linearbewegung durch hydraulische, elektrische oder mechanische Bewegungsvorrichtungen wie beispielsweise Hydraulikzylinder, Linearmotoren, Linearantriebe, Kulissensteuerungen etc. durchzuführen.

Fig. 3 zeigt eine Schnittdarstellung der Umformvorrichtung 3 in Stellung A gemäß Fig. 2. Dabei ist wiederum der Waffelfladen 8 über der Tiefziehöffnung 14 bzw. der Tiefziehform 13 auf dem Ziehring 15 positioniert. Der Stempel 16 und die Stempelbewegungsvorrichtung befinden sich in Stellung A, also in hochgezogener Position. Desweiteren ist die Auswurfvorrichtung 19 dargestellt, die in dieser Ausführungsform als federnd vorspannbarer Stempel ausgebildet ist.

Darüber hinaus sind in der Schnittdarstellung gemäß Fig. 3 Vorwölbelemente 22 ersichtlich. In Stellung A gemäß Fig. 2 und 3 sind diese zur Gänze in der Basisfläche 21 versenkt.

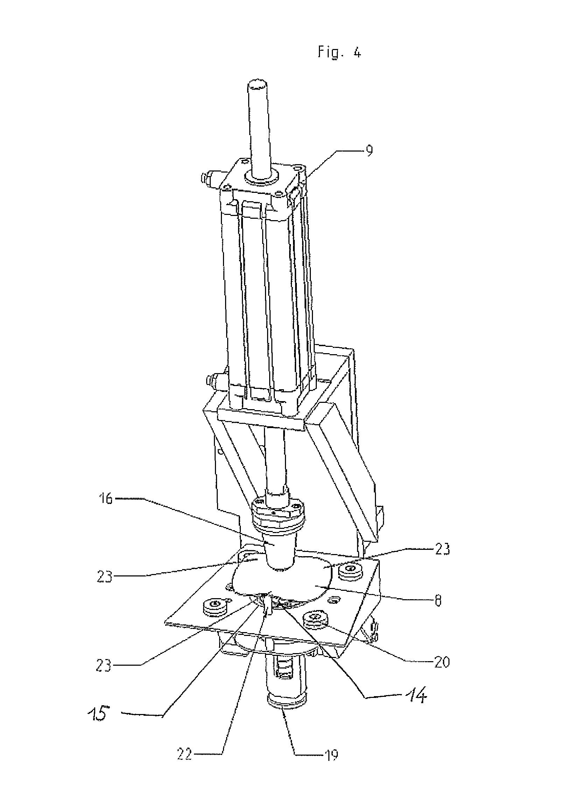

Fig. 4 zeigt eine schematische Schrägansicht der Vorrichtung in Stellung B. Dabei sind die Vorwölbelemente 22 entgegen der Haltekraft derart ausgefahren, dass sie über die Basisfläche 21 ragen und dem Waffelfladen eine mehrfach gewölbte Form geben und diese insbesondere in den Faltenbereichen 23 vorformen.

Der Waffelfladen ist somit von einer im Wesentlichen planen Form durch die Vorwölbelemente in eine mehrfach aufgewölbte Form gebracht.

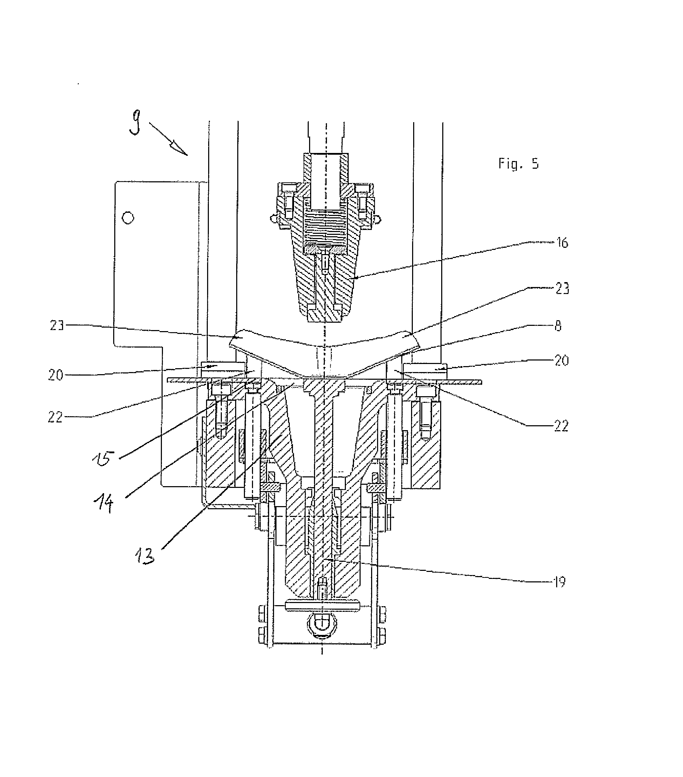

Fig. 5 zeigt ebenfalls die Vorrichtung in Stellung B, jedoch in einer schematisierten Schnittdarstellung. Der vorgewölbte Waffelfladen 8 liegt zwar mittig im Bereich der Auswurfvorrichtung 19 über der Tiefziehöffnung auf, er ist jedoch in seinem Randbereich durch die Vorwölbelemente 22 Richtung Stempel 16 gewölbt. Der Stempel selbst kann während der Vorwölbung oder auch nachdem die Vorwölbung abgeschlossen ist, Richtung Tiefziehöffnung und weiter in die Tiefziehöffnung hinein bewegt werden.

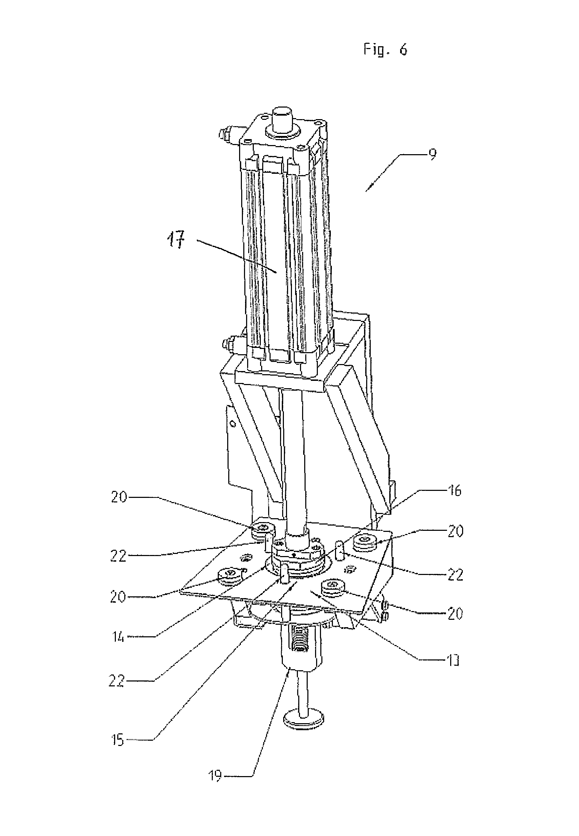

In Fig. 6 ist eine Schrägdarstellung der maßgeblichen Teile der Umformvorrichtung in Stellung C dargestellt. Dabei ist der Stempel 16 durch die

Stempelbewegungsvorrichtung 17 durch die Tiefziehöffnung 14 und den Ziehring 15 in die Tiefziehform 13 gedrückt. Ähnlich eines Tiefziehvorganges wird die Ronde oder der Waffelfladen dabei mit in die Tiefziehform gezogen.

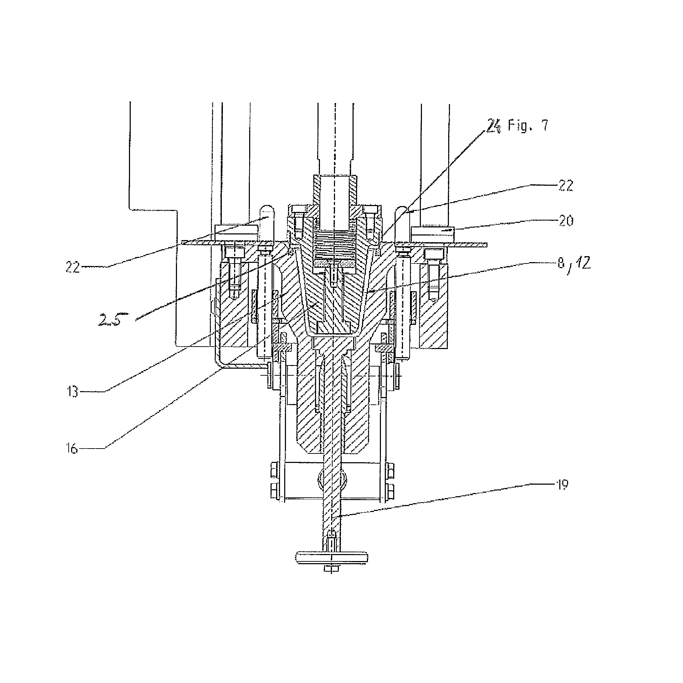

Auch Fig. 7 zeigt die Tiefziehvorrichtung 9 in Stellung C, jedoch in einer Schnittdarstellung. Dabei ist der Waffelfladen 8 becherförmig verformt zwischen dem Stempel 16 und der Tiefziehform 13 angeordnet. Die federnd spannbare, in Bewegungsrichtung der Stempelbewegungsvorrichtung geführt gelagerte Auswurfvorrichtung 19 ist dabei von einer ausgefahrenen Stellung, wie in Fig. 3 zu sehen, von dem Stempel in eine vorgespannte Stellung gedrückt.

Optional kann im Bereich des Ziehrings eine Schneidanordnung vorgesehen sein, die mit einem Schneidring 24 des Stempels zusammenwirkt, um den Waffelfladen im Bereich des Becherrandes vom Überstand abzutrennen. In der vorliegenden Ausführung ist am Stempel ein Schneidring 24 vorgesehen, der mit dem Anschlagring 25 zusammenwirkt. Beim Einfahren des Stempels in die Tiefziehöffnung wird der Schneidring 24 mit seiner Schneide an den Anschlagring 25 gedrückt. Durch die vorliegende Geometrie wird der Waffelfladen entlang der Schneidkante des Schneidrings 24 abgeschnitten.

Es sei angemerkt, dass in der vorliegenden Form ein ringförmiger Schneidring vorgesehen ist. Es entspricht jedoch durchaus dem Erfindungsgedanken, den Schneidring oval, rechteckig, sternförmig oder jeder erdenklichen Kontur folgend, insbesondere jeder erdenklichen geschlossenen Kontur folgend auszubilden.

Durch das Einfahren des Stempels 16 wird die Auswurfvorrichtung 19 vorgespannt. Die Kraft des Stempels wirkt über den Waffelfladen zur Spannung eines elastischen Elements der Auswurfvorrichtung 19.

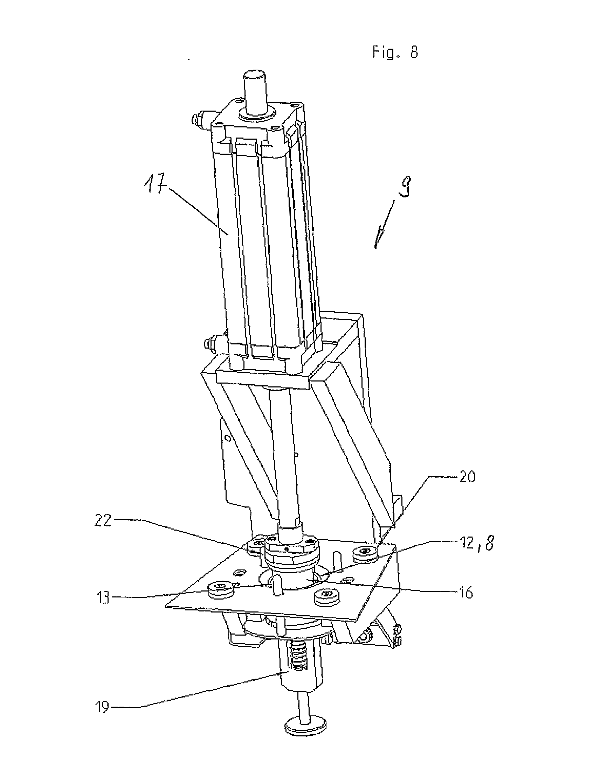

Fig. 8 zeigt eine Schrägansicht derselben Ausführungsform der Vorrichtung jedoch in Stellung D.

In diesem Verfahrensschritt bewegt sich der Stempel 16 wieder aus der Tiefziehform 13 heraus. Durch die federnd vorgespannte Auswurfvorrichtung 19 wird das, aus dem Waffelfladen geformte, nun becherförmige und zumindest teilweise verfestigte und formstabile gebackene Produkt 12 bzw. der essbare Körper mit dem Stempel aus der Tiefziehform gedrückt. Dabei behält der in das Produkt umgeformte und tiefgezogene Waffelfladen die gewünschte Form.

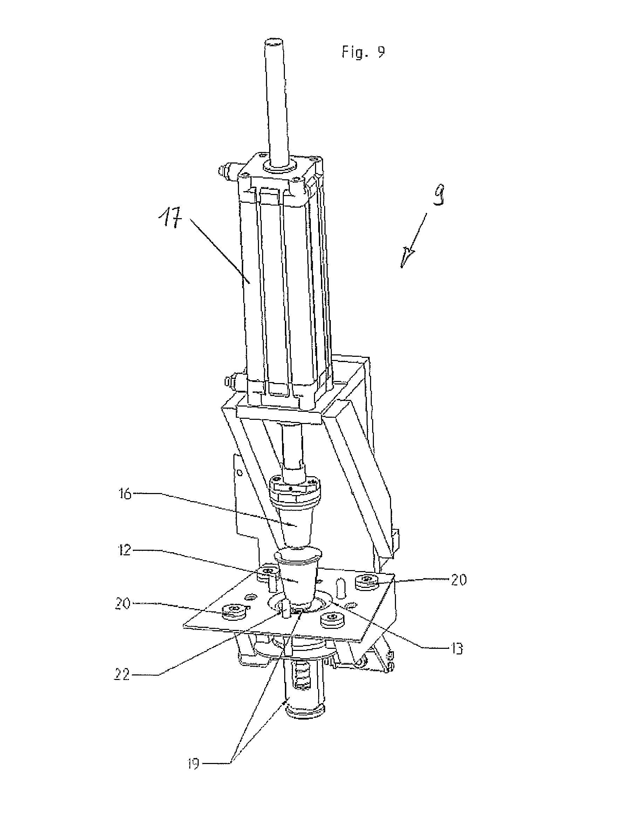

Fig. 9 zeigt dieselbe Anordnung, jedoch in Stellung E in der der Stempel zur Gänze aus dem essbaren Körper ausgezogen ist, wobei der essbare Körper, der aus dem Waffelfladen gebildet wurde, durch die Auswurfvorrichtung 19 ebenfalls zur Gänze aus der Tiefziehform 13 gedrückt ist.

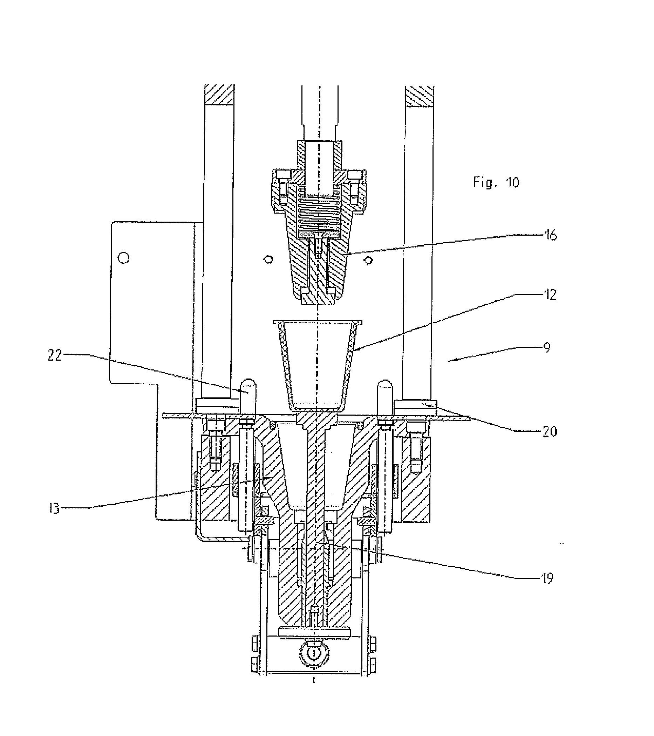

Fig. 10 zeigt eine Schnittdarstellung der Vorrichtung gemäß Fig. 9. Wiederum zu sehen ist die ausgefahrene Auswurfvorrichtung 19, die darauf positionierte hohlkörperförmige gebackene Produkt 12 und der aus dem Produkt herausgezogene Stempel 16 der Tiefziehvorrichtung 9.

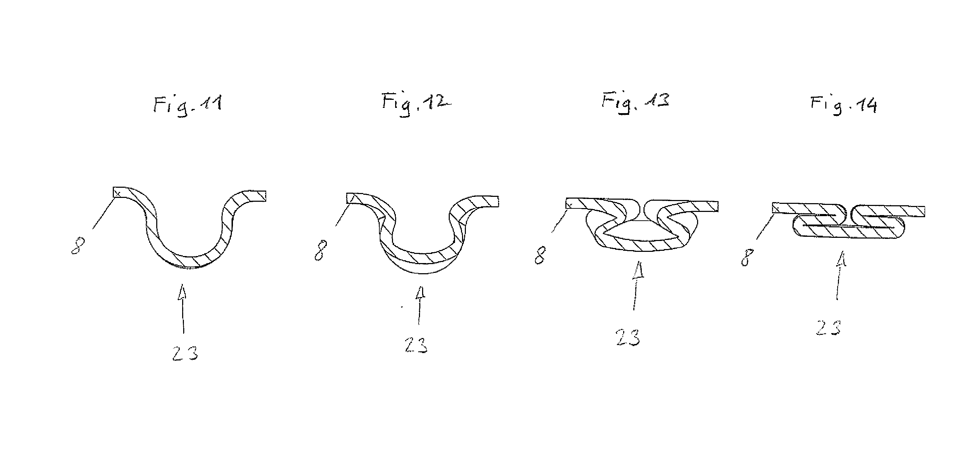

Bei der erfindungsgemäßen Tiefziehbewegung, wie beispielsweise in den Figuren 2 bis 7 in einer bevorzugten Reihenfolge dargestellt, kommt es aufgrund der geometrischen und physikalischen Gegebenheiten zu einer Faltenbildung des Waffelfladen bzw. des hohlkörperförmigen, gebackenen Produktes. Diese Faltenbildung ist wie eingangs erwähnt gewünscht und verleiht dem fertigen Produkt eine Reihe vorteilhafter Eigenschaften. Die Bildung der Falten ist in den Figuren 11 bis 14 detailliert dargestellt. Diese zeigen eine schematische Schnittansicht eines Segmentes, insbesondere eines Faltenbereiches 23 des Randes des Waffelfladen, welcher durch die erfindungsgemäße Umformung im fertigen Zustand dem Rand des hohlkörperförmigen, gebackenen Produktes entspricht. Die Vorwölbung durch die Vorwölbelemente 22 (zu sehen beispielsweise in Fig. 4) gibt dem Waffelfladen eine Form, die die Faltenbildung an gewünschten Positionen ermöglicht und/oder begünstigt. Im vorliegenden Fall sind drei Vorwölbelemente vorgesehen, wodurch in drei Bereichen des Waffelfladen eine gezielte Faltenbildung erreicht wird. Diese Faltenbereiche 23 des Waffelfladen 8 sind zu Beginn des Tiefziehvorganges leicht gegen die Tiefziehrichtung aufgewölbt, wobei der Waffelfladen im Wesentlichen normal zur Tiefziehrichtung verläuft. Dringt der Stempel in die Tiefziehöffnung 14 und die Tiefziehform 13 ein, so wird dabei der Waffelfladen in einen becherförmigen Körper umgeformt. Die Seitenwände des becherförmigen Körpers werden dabei von der Grundstellung in Richtung Tiefziehstempel gebogen. Da der Umfang des flachliegenden Waffelfladen größer ist als der Umfang des Becherrandes des fertigen becherförmigen Produktes kommt es insbesondere im Becherrandbereich aber auch in einem Bereich in der Nähe des Becherbodens zu der gewünschten Faltenbildung. Dabei bilden die Faltenbereiche 23 zu Beginn der Tiefziehbewegung Ω-förmige (Omega-förmige) Auswölbungen wie in Fig. 11 gezeigt. Bei weiterem Eindringen und Tiefziehen des Waffelfladen werden diese Ω-förmigen Auswölbungen immer stärker gefaltet, wie es in den Figuren 12 und 13 dargestellt ist. Ist der Stempel ganz oder annähernd ganz in die Tiefziehform eingefahren, so bildet sich die gewünschte Faltenform gemäß Fig. 14 aus. Anzumerken ist, dass dies eine mögliche Faltenform ist. Durch geeignete Wahl der Vorwölbelemente z.B. asymmetrische Vorwölbelemente, schräge Vorwölbelemente, aber auch durch die Anzahl der Vorwölbelemente ist es dem Erfindungsgedanken entsprechend möglich, andere Faltenformen zu erzielen.

Durch die Faltenform, wie beispielsweise in Fig. 14 dargestellt, weist der Waffelfladen beim Backvorgang eine konstante Dicke auf und erhält erst durch die gezielte Faltung in den Faltenbereichen 23 die gewünschten verstärkten Bereiche. Wären die Vorwölbelemente nicht vorgesehen, so würden zwar ebenfalls Falten entstehen, diese würden aber nicht gezielt positionierbar sein, sodass die Falten jedes einzelnen Waffelfladen an unterschiedlichen Stellen entstehen würden. Dies bringt insbesondere bei der Massenproduktion eine hohe Ausschussrate von Waffelkörpern durch beispielsweise Rissbildung, unregelmäßige Anordnung der Falten, etc. mit sich. Bei der vorliegenden Erfindung ist eine Wahl der Position der Faltenbereiche möglich. Bevorzugt sind Falten entlang symmetrischer oder rotationssymmetrischer Muster angeordnet.

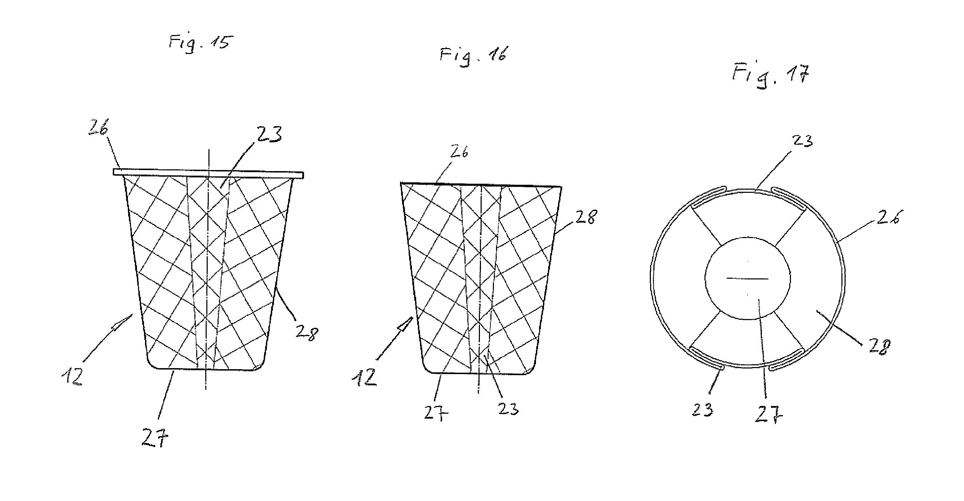

Fig. 15 zeigt eine Ausführungsform eines möglichen gebackenen tiefgezogenen Produktes. Dieses weist einen Rand 26, einen Boden 27, einen Mantel 28 und Faltenbereiche 23 auf. In der vorliegenden Ausführungsform ist der Rand seitlich auskragend ausgeführt. Diese kragenförmige oder umgebogene Ausführung erhöht die Stabilität und Widerstandsfähigkeit des Randes.

Fig. 16 zeigt eine weitere Ausführungsform eines erfindungsgemäßen gebackenen Produktes 12 in einer Seitenansicht. Das Produkt umfasst einen Rand 26, einen Boden 27, einen Mantel 28 sowie Faltenbereiche 23. Die gezeigte Ausführungsform ist becherförmig ausgebildet. Es entspricht jedoch auch dem Erfindungsgedanken das gebackene Produkt kugelig, halbkugelförmig, zylindrisch, kegelförmig, würfelförmig, oder quaderförmig etc. auszuführen.

Fig. 17 zeigt eine Ansicht eines erfindungsgemäßen Backproduktes nach Fig.16 von oben. Dabei sind wiederum der Rand 26, der Boden 27, der Mantel 28 sowie die Faltenbereiche 23 dargestellt. Die Faltenbereiche 23 sind, wie angemerkt, mehrfach übereinandergelegt. Die vorliegende Darstellung ist eine schematische Darstellung. In der Praxis kann es vorkommen, dass insbesondere die mehrfach übereinanderliegenden Bereiche durch den Stempel gequetscht sind und dass somit der Waffelfladen in diesem Bereich dünner ausgeführt ist als in den restlichen Bereichen des Mantels 28. So könnte trotz der Mehrlagigkeit in den Faltenbereichen eine Konstante Gesamtwanddicke entlang des gesamten Mantels vorliegen.

In der vorliegenden Ausführung der Fig. 17 sind zwei Faltenbereiche 23 regelmäßig am Umfang verteilt. Es entspricht jedoch ebenfalls dem Erfindungsgedanken mehr als zwei insbesondere drei, vier, fünf, sechs oder mehr Faltenbereiche vorzusehen.

In den gezeigten Ausführungsformen werden die Faltenbereiche durch die Vorwölbelemente 22 vorgewölbt. Es ist aber durchaus im Sinne der Erfindung, dass keine entgegen der Tiefziehrichtung ausfahrenden Vorwölbelemente verwendet werden, sondern beispielsweise Vertiefungen oder Ausschnitte im Bereich des Ziehrings oder im Bereich der Basisfläche der Umformvorrichtung vorgesehen sind. So sind in einer weiteren, nicht dargestellten, Ausführungsform im Bereich des Ziehrings und im Bereich der Tiefziehöffnung Ausschnitte vorgesehen, in welche Bereiche der backweichen Ronde, insbesondere des heißen, formbaren Waffelfladen durch die Schwerkraft oder eine andere Haltekraft vor dem Tiefziehvorgang und während des Tiefziehvorgangs hineingezogen werden. Auch diese Konfiguration bildet Faltenbereiche, welche bei dem Tiefziehvorgang zu der gewünschten, gezielten Faltenbildung führen.

An dieser Stelle sei angemerkt, dass sich die Erfindung nicht auf die angeführten Ausführungsbeispiele beschränkt. Weitere, dem Erfindungsgedanken entsprechende Ausführungen ergeben sich auch aus Kombinationen einzelner oder mehrerer Merkmale, die aus der gesamten Beschreibung, den Figuren und/oder den Ansprüchen zu entnehmen sind. Somit sind auch Ausführungen offenbart, die aus Kombinationen von Merkmalen bestehen, die aus unterschiedlichen Ausführungsbeispielen stammen. Die Figuren sind zumindest teilweise schematische Darstellungen, wobei die Dimensionen und Proportionen von weiteren, zeichnerisch nicht dargestellten, Ausführungsformen oder Merkmalen sowie von realen Ausführungen abweichen können.

### Bezugszeichenliste

- 1: Backofen
- 2: Übergabevorrichtung
- 3: Umformvorrichtung
- 4: Greifer
- 5: Drehachse der Übergabevorrichtung
- 6: Übergabefläche
- 7: Drehachse der Umformvorrichtung
- 8: Waffelfladen
- 9: Tiefziehvorrichtung
- 10: Abnahmevorrichtung
- 11: Nachkonditioniervorrichtung
- 12: Geformtes gebackenes Produkt
- 13: Tiefziehform
- 14: Tiefziehöffnung
- 15: Ziehring
- 16: Stempel
- 17: Stempelbewegungsvorrichtung
- 18: Bewegungsrichtung der Stempelbewegungsvorrichtung
- 19: Auswurfvorrichtung
- 20: Zentrierfortsatz
- 21: Basisfläche der Umformvorrichtung
- 22: Vorwölbelemente
- 23: Faltenbereiche
- 24: Schneidring
- 25: Anschlagring
- 26: Rand
- 27: Boden
- 28: Mantel

## Patentansprüche

1. Verfahren zur Herstellung von hohlkörperförmigen, gebackenen Produkten (12) aus verzehrbaren, gebackenen Waffelfladen (8), die im heißen, formbaren Zustand umgeformt und während und/oder nach dem Umformvorgang abkühlt und somit verfestigt werden, wobei die Waffelfladen (8) im heißen, formbaren Zustand
- einer Tiefziehöffnung (14) zugeführt,
- von einer Vorformvorrichtung (22) in den Faltenbereichen (23) von einer im Wesentlichen planen Form in eine, in den Faltenbereichen (23) gewölbte, vorgeformte Form gebracht
- und von einem Stempel (16) in eine Tiefziehöffnung (14) tiefgezogen werden,
- wobei sich, beeinflusst durch die Vorformung, die Faltenbereiche (23) jedes einzelnen Waffelfladens (8) beim Tiefziehvorgang mehrlagig übereinander legen,
**dadurch gekennzeichnet, dass**
- der Waffelfladen (8) zuerst plan auf einem Ziehring (15) über der Tiefziehöffnung (14) positioniert,
- dort von einer Haltekraft gehalten,
- anschließend von Vorwölbelementen (22) der Vorformvorrichtung in den Faltenbereichen (23) entgegen der Haltekraft aufgewölbt und
- anschließend von dem Stempel (16) der Tiefziehvorrichtung (9) in die Tiefziehöffnung (14) tiefgezogen wird.

2. Verfahren nach Anspruch 1, **dadurch gekennzeichnet, dass** der vorgeformte Waffelfladen (8) beim Tiefziehvorgang von einer, in den Faltenbereichen (23) gewölbten Form in eine im Wesentlichen becherförmige Form gebracht wird.

3. Verfahren nach einem der Ansprüche 1 oder 2, **dadurch gekennzeichnet, dass** beim Tiefziehvorgang die gewölbten Faltenbereiche (23) zuerst Ω-förmig und in weiterer Folge mehrlagig übereinanderliegend ausgebildet sind.

4. Verfahren nach einem der Ansprüche 1 bis 3, **dadurch gekennzeichnet, dass** dem Waffelfladen (8) bei der Vorformung eine die Position der Faltenbereiche (23) steuerbare Form gegeben wird.

5. Verfahren nach einem der Ansprüche 1 bis 4, **dadurch gekennzeichnet, dass**
- der Waffelfladen (8) entlang einer Übergabefläche (6) der Tiefziehöffnung (14) zugeführt wird,
- von Zentrierfortsätzen (20) über der Tiefziehöffnung (14) zentriert wird,
- von der Vorformvorrichtung (22) vorgeformt und
- von dem Stempel (16) der Tiefziehvorrichtung (9) in die Tiefziehöffnung (14) tiefgezogen wird,
- dabei und/oder danach abgekühlt und verfestigt und
- anschließend von der Auswurfvorrichtung (19) aus der Tiefziehöffnung (14) ausgeworfen wird.

6. Verfahren nach einem der Ansprüche 1 bis 5, **dadurch gekennzeichnet, dass** der Waffelfladen (8) aus einem Teig oder einer Backmasse besteht, die ein Plastifizierungsmittel, insbesondere ein temperaturabhängiges Plastifizierungsmittel, wie beispielweise Zucker, Erythrit und/oder Xylit enthält.

7. Hohlkörperförmiges, gebackenes Produkt (12), das zumindest teilweise aus einem verzehrbaren, gebackenen Waffelfladen (8) gebildet ist, welcher im heißen Zustand umformbar und während und/oder nach dem Umformvorgang eine becherförmige Form aufweist, **dadurch gekennzeichnet, dass** das Produkt mehrlagig ausgeführte Faltenbereiche (23) aufweist, die symmetrisch und/oder rotationsymmetrisch am Umfang verteilt angeordnet sind.

8. Hohlkörperförmiges, gebackenes Produkt (12) nach Anspruch 7, **dadurch gekennzeichnet, dass** die Haupterstreckungsrichtungen der Faltenbereiche (23) im Wesentlichen normal zum Becherrand (26) Richtung Becherboden (27) verlaufen.

9. Vorrichtung zur Herstellung eines hohlkörperförmigen, gebackenen Produktes (12), umfassend:
- eine Tiefziehvorrichtung (9) mit einer Tiefziehöffnung (14), über der ein gebackener, formbarer und verfestigbarer Waffelfladen (8) positionierbar ist, und
- mit einem Stempel (16), welcher über eine Stempelbewegungsvorrichtung (17) von einer Position außerhalb der Tiefziehöffnung (14) in diese zumindest teilweise einführbar ist,
**dadurch gekennzeichnet, dass** im Bereich der Tiefziehöffnung (14) eine Vorformvorrichtung (22) zur Vorformung des Waffelfladen (8) von einer im Wesentlichen planen Form in eine, in den Faltenbereichen (23) gewölbte, vorgeformte Form vorgesehen ist,
und dass die Vorformvorrichtung Vorwölbelemente (22) umfasst, die im Bereich der Faltenbereiche (23) des Waffelfladens angeordnet und bevorzugt in Richtung Waffelfladen (8) ausfahrbar sind.

10. Vorrichtung nach Anspruch 9, **dadurch gekennzeichnet, dass** ein die Tiefziehöffnung (14) im Wesentlichen umgebender Ziehring (15) vorgesehen ist, auf dem der Waffelfladen (8) mit einer Haltekraft gehalten ist.

11. Vorrichtung nach einem der Ansprüche 9 oder 10, **dadurch gekennzeichnet, dass** der Ziehring (15) parallel zur oder in der Übergabefläche (6) angeordnet ist.

12. Vorrichtung nach einem der Ansprüche 9 bis 11, **dadurch gekennzeichnet, dass** zumindest ein Zentrierfortsatz (20) zur Zentrierung und/oder Positionierung des Waffelfladens (8) über der Tiefziehöffnung (14) vorgesehen ist, wobei bevorzugt die Zentrierfortsätze (20) den Ziehring (15) entgegen der Haltekraft überragen.

13. Vorrichtung nach einem der Ansprüche 9 bis 12, **dadurch gekennzeichnet, dass** die Vorwölbelemente (22) von einer zurückgezogenen Position, in der sie im Wesentlichen in der Übergabefläche (6) versenkt sind, in eine ausgefahrene Position, in der sie den Ziehring (15) überragen, bringbar sind, wobei bevorzugt zur Bewegung der Vorwölbelemente (22) ein Antrieb vorgesehen ist.

## Claims

1. A method for producing hollow-body-shaped baked products (12) from edible baked wafer cakes (8) which are reshaped in the hot malleable state and are cooled and therefore solidified during and/or after the reshaping process, wherein the wafer cakes (8) in the hot malleable state
- are supplied to a deep-drawing opening (14)
- are brought by a pre-forming device (22) in the fold regions (23) from a substantially planar shape into a pre-formed shape which is curved in the fold regions (23),
- and are deep drawn by a punch (16) into a deep drawing opening (14),
- wherein, influenced by the pre-forming, the fold regions (23) of each individual wafer cake (8) lie one above the other in multiple layers in the deep drawing process,
**characterized in that**
- the wafer cake (8) is initially positioned flat on a drawing ring (15) above the deep drawing opening (14),
- is held there by a retaining force,
- is then curved contrary to the retaining force by pre-curving elements (22) of the pre-forming device in the fold regions (23) and
- is then deep drawn by the punch (16) of the deep drawing device (9) into the deep drawing opening (14).

2. The method according to claim 1, **characterized in that** the pre-formed wafer cake (8) is brought during the deep drawing process from a curved shape in the fold regions (23) into a substantially cup-shaped shape.

3. The method according to any one of claims 1 or 2, **characterized in that** during the deep drawing process the curved fold regions (23) are initially Ω-shape and subsequently configured to be multilayer lying one above the other.

4. The method according to any one of claims 1 to 3, **characterized in that** the wafer cake (8) is given a shape which can control the position of the fold regions (23) during the pre-forming.

5. The method according to any one of claims 1 to 4, **characterized in that**
- the wafer cake (8) is supplied along a transfer surface (6) to the deep drawing opening (14),
- is centred by centring extensions (20) above the deep drawing opening (14),
- is pre-formed by the pre-forming device (22) and
- is deep drawn by the punch (16) of the deep drawing device (9) into the deep drawing opening (14),
- is thereby and/or thereafter cooled and solidified and
- is then ejected from the deep drawing opening (14) by the ejector device (19).

6. The method according to any one of claims 1 to 5, **characterized in that** the wafer cake (8) consists of a dough or a baking mass which contains a plasticizing agent, in particular a temperature-dependent plasticizing agent such as for example sugar, erythitol and/or xylitol.

7. A hollow-body-shaped baked product (12) which is formed at least partially from an edible baked wafer cake (8) which can be reshaped in the hot state and has a cup-shaped shape during and/or after the reshaping process, **characterized in that** the product has multilayer fold regions (23) which are arranged symmetrically and/or rotationally symmetrically distributed on the circumference.

8. The hollow-body-shaped baked product (12) according to claim 7, **characterized in that** the principal directions of extension of the fold regions (23) run substantially normal to the cup edge (26) in the direction of the cup base (27).

9. An apparatus for producing a hollow-body-shaped baked product (12) comprising:
- a deep drawing device (9) having a deep drawing opening (14) above which a baked, malleable and solidifiable wafer cake (8) can be positioned and
- comprising a punch (16) which can be introduced by means of a punch moving device (17) from a position outside the deep drawing opening (14) into said opening at least partially,
**characterized in that** in the region of the deep drawing opening (14) a pre-forming device (22) is provided for pre-forming the wafer cake (8) from a substantially planar shape into a pre-formed shape which is curved in the fold regions (23),
and that the pre-forming device comprises pre-curving elements (22) which are disposed in the region of the fold regions (23) of the wafer cake and preferably can be extended in the direction of the wafer cake (8).

10. The apparatus according to claim 9, **characterized in that** a drawing ring (15) substantially surrounding the deep drawing opening (14) is provided on which the wafer cake (8) is held with a retaining force.

11. The apparatus according to any one of claims 9 or 10, **characterized in that** the drawing ring (15) is disposed parallel to or in the transfer surface (6).

12. The apparatus according to any one of claims 9 to 11, **characterized in that** at least one centring extension (20) is provided for centring and/or positioning the wafer cake (8) above the deep drawing opening (14) wherein preferably the centring extensions (20) project beyond the drawing ring (15) against the retaining force.

13. The apparatus according to any one of claims 9 to 12, characterized tin that the pre-curving elements (22) can be brought from a retracted position in which they are substantially recessed in the transfer surface (6) into an extended position in which they project beyond the drawing ring (15) wherein a drive is preferably provided for moving the pre-curving elements (22).

## Revendications

1. Procédé destiné à fabriquer des produits (12) cuits au four en forme de corps creux en galette gaufrées (8) comestibles, cuites au four que l'on transforme à l'état chaud malléable et que l'on refroidit et solidifie de ce fait après le processus de transformation, à l'état chaud, malléable les galettes gaufrées (8)
- étant alimentées vers un orifice d'emboutissage (14),
- par un dispositif de prémoulage (22) dans les zones de plis (23) étant amenées d'une forme sensiblement plate dans une forme prémoulée cambrée dans les zones de plis (23),
- et par un poinçon (16) étant embouties dans un orifice d'emboutissage (14),
- sous l'influence du prémoulage, les zones des plis (23) de chaque galette gaufrée individuelle (8) se posant l'une sur l'autre en plusieurs couches,
**caractérisé en ce**
- **qu'**on positionne d'abord la galette gaufrée (8) à plat sur une matrice d'emboutissage (15), au-dessus de l'orifice d'emboutissage (14),
- **qu'**elle y est maintenue par une force de retenue,
- **qu'**elle est ensuite cambrée dans les zones de plis (23) à l'encontre de la force de retenue par des éléments de précambrure (22) du dispositif de prémoulage et
- **qu'**elle est ensuite emboutie par le poinçon (16) du dispositif d'emboutissage (9) dans l'orifice d'emboutissage (14).

2. Procédé selon la revendication 1, **caractérisé en ce que** lors du processus d'emboutissage, on amène la galette gaufrée (8) prémoulée d'une forme cambrée dans les zones de plis (23) dans une forme sensiblement en godet.

3. Procédé selon l'une quelconque des revendications 1 ou 2, **caractérisé en ce que** lors du processus d'emboutissage, les zones de plis (23) cambrées adoptent d'abord une forme d'Ω et se présentent par la suite en plusieurs couches superposées.

4. Procédé selon l'une quelconque des revendications 1 à 3, **caractérisé en ce que** lors du prémoulage, on donne à la galette gaufrée (8) une forme susceptible de commander la position des zones de plis (23).

5. Procédé selon l'une quelconque des revendications 1 à 4, **caractérisé en ce**
- **qu'**on alimente la galette gaufrée (8) le long d'une surface de transfert (6) vers l'orifice d'emboutissage (14),
- **qu'**elle est centrée par des prolongements de centrage (20) au-dessus de l'orifice d'emboutissage (14),
- **qu'**elle est prémoulée par le dispositif de prémoulage (22) et
- **qu'**elle est emboutie dans l'orifice d'emboutissage (14) par le poinçon (16) du dispositif d'emboutissage (9),
- **qu'**à cet effet et/ou après, on la refroidit et on la solidifie et
- **qu'**elle est ensuite éjectée de l'orifice d'emboutissage (14) par le dispositif d'éjection (19).

6. Procédé selon l'une quelconque des revendications 1 à 5, **caractérisé en ce que** la galette gaufrée (8) est constituée d'une pâte ou d'une préparation pour pâtisserie qui contient un plastifiant, notamment un plastifiant dépendant de la température, comme par exemple du sucre, de l'érythritol ou du xylitol.

7. Produit (12) cuit au four en forme de corps creux, qui est formé au moins en partie en une galette gaufrée (8) consommable, cuite au four, laquelle est malléable à l'état chaud et/ou pendant et/ou après le processus de transformation présente la forme d'un godet, **caractérisé en ce que** le produit présente des zones de plis (23) réalisées en plusieurs couches qui sont placées en étant disposées sur le pourtour de manière symétrique et/ou symétrique en rotation.

8. Produit (12) cuit au four en forme de corps creux selon la revendication 7, **caractérisé en ce que** les directions d'extension principale des zones de plis (23) s'étendent de manière sensiblement normale du bord (26) du godet en direction du fond (27) du godet.

9. Dispositif destiné à fabriquer un produit (12) cuit au four, en forme de corps creux, comprenant :
- un dispositif d'emboutissage (9) avec un orifice d'emboutissage (14) au-dessus duquel peut être positionnée une galette gaufrée (8) malléable et solidifiable et
- avec un poinçon (16) qui par l'intermédiaire d'un dispositif (17) de déplacement de poinçon, à partir d'une position à l'extérieur de l'orifice d'emboutissage (14) peut s'introduire au moins en partie dans celui-ci,
**caractérisé en ce que** dans la région de l'orifice d'emboutissage (14), il est prévu un dispositif de prémoulage (22) pour prémouler la galette gaufrée (8) d'une forme sensiblement plane dans une forme prémoulée, cambrée dans les zones de plis (23),
et **en ce que** le dispositif de prémoulage comprend des éléments de précambrure (22) qui sont placés dans la région des zones de plis (23) de la galette gaufrée et qui sont déployables de préférence en direction de la galette gaufrée (8).

10. Dispositif selon la revendication 9, **caractérisé en ce qu'**il est prévu une matrice d'emboutissage (15) entourant sensiblement l'orifice d'emboutissage (14), sur laquelle la galette gaufrée (8) est maintenue avec une force de retenue.

11. Dispositif selon l'une quelconque des revendications 9 ou 10, **caractérisé en ce que** la matrice d'emboutissage (15) est placée à la parallèle de ou dans la surface de transfert (6).

12. Dispositif selon l'une quelconque des revendications 9 à 11, **caractérisé en ce qu'**il est prévu au moins un prolongement de centrage (20) pour le centrage et/ou le positionnement de la galette gaufrée (8) au-dessus de l'orifice d'emboutissage (14), les prolongements de centrage (20) saillant de préférence par-dessus la matrice d'emboutissage (15), à l'encontre de la force de retenue.

13. Dispositif selon l'une quelconque des revendications 9 à 12, **caractérisé en ce que** les éléments de précambrure (22) peuvent être amenés d'une position en retrait, dans laquelle ils sont sensiblement plongés dans la surface de transfert (6) dans une position déployée, dans laquelle ils saillissent par-dessus la matrice d'emboutissage (15) un entraînement étant prévu de préférence pour le déplacement des éléments de précambrure (22) .
